# EUROPEAN PATENT APPLICATION

(11) **EP 2 375 671 A1**
(43) Date of publication of application: **12.10.2011**
(21) Application number: 09837326.9
(22) Date of filing: 20.10.2009
(51) Int. Cl.: H04L 29/06

(54) **ACCESS METHOD AND ACCESS APPARATUS FOR NETWORK FILE SYSTEM**

(30) Priority: 29.12.2008 CN 200810187672
(71) Applicant: Chengdu Huawei Symantec Technologies Co., Ltd., Sichuan 611731 (CN)
(72) Inventor: LUO, Jiaolin, Chengdu Sichuan 611731 (CN)
(74) Representative: Charles, Glyndwr
(86) International application number: PCT/CN2009/074531
(87) International publication number: WO 2010/078769

(57) **Abstract**

A method and an apparatus for accessing a network file system (NFS) are disclosed. The method includes: receiving a first request message, which is sent by a user equipment (UE) to the NFS according to an available first file type; converting, according to a preset mapping relation, the first request message into a second request message capable of driving a second file type in the NFS, and sending the second request message to the NFS; receiving a first response message, which is based on the second file type and is sent by the NFS to the UE in response to the second request message; and converting, according to the preset mapping relation, the first response message into a second response message which is based on the first file type, and sending the second response message to the UE. With the present invention, the file system protocol can be converted, and the NFS is compatible with multiple operating systems.

## Description

This application claims priority to Chinese Patent Application No. 200810187672.2, filed with the Chinese Patent Office on December 29, 2008 and entitled "Method and Apparatus for Accessing Network File System", which is incorporated herein by reference in its entirety.

### FIELD OF THE INVENTION

The present invention relates to the field of communication technologies, and in particular, to a method and an apparatus for accessing a network file system (NFS).

### BACKGROUND OF THE INVENTION

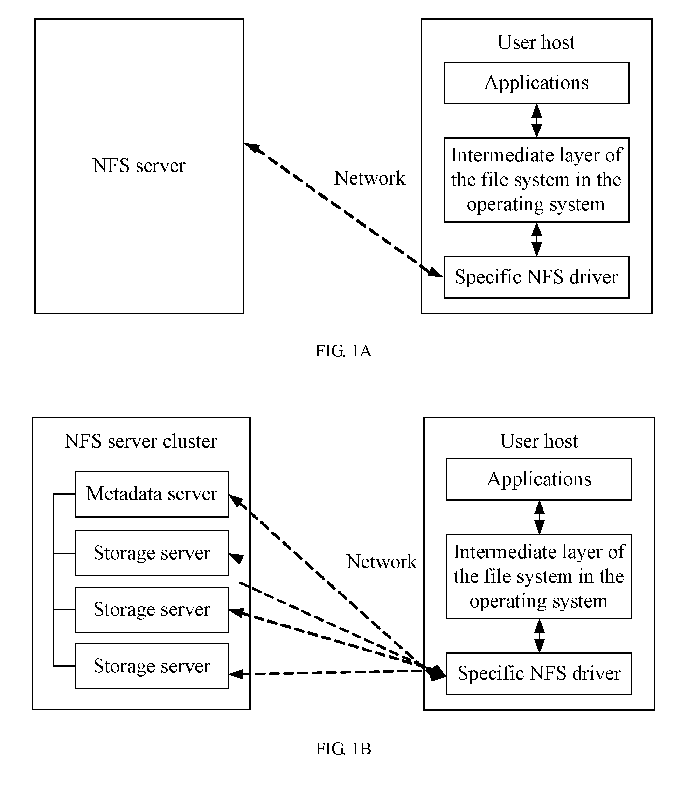

Two network structures mainly exist in the NFS. FIG. 1A is a schematic diagram showing a network structure of a point-to-point NFS in the prior art; and FIG. 1B is a schematic diagram showing a network structure of an NFS based on distributed access in the prior art. As shown in FIG. 1A, in the point-to-point NFS, a user host obtains file data from an NFS server. As shown in FIG. 1B, in the NFS based on distributed access, a user host obtains file data from multiple storage servers of an NFS server cluster concurrently, and the throughput is improved through concurrent access.

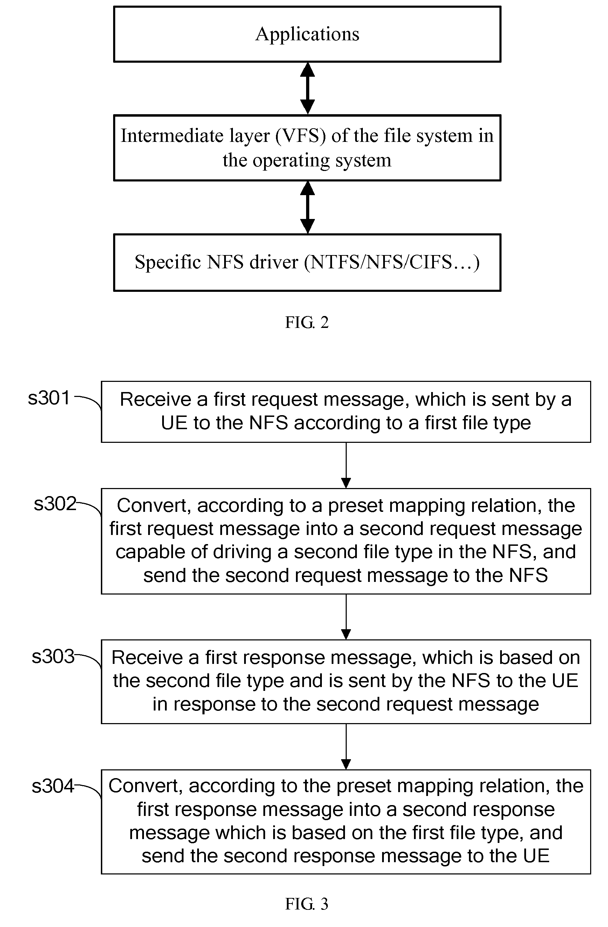

In the two types of NFS above, the corresponding NFS drivers need to be developed in the operating system of the user host. FIG. 2 shows a structure of a file system in an operating system of the user host in the prior art. The file system includes: applications (such as databases), an intermediate-layer virtual file system (VFS) of the file system in the operating system, and drivers of network file systems such as the new technology file system (NTFS), file allocation table 32 (FAT32), extended file system (EXT3), journal file system (JFS), network file system (NFS), or common Internet file system (CIFS). Through encapsulation of the VFS, the applications support the file system. In order for a file system to get compatible with multiple operating systems, specific drivers need to be developed under different operating systems, for example, AIX (enterprise-level Unix operating system developed by IBM), Solaris (enterprise-level Unix operating system developed by SUN), HPUX, IRIX, BSD, Linux, and Windows. The development of drivers depends on the operating system. Some operating systems are open enough and it is easy to develop drivers on such operating systems, for example, Linux, Windows, and BSD; but other operating systems are not open and it is difficult to develop drivers on such operating systems, for example, AIX, Solaris, and HPUX.

In the process of implementing the present invention, the inventor finds at least the following problems in the prior art:

The NFS is hardly compatible with multiple operating systems. The compatibility is bottlenecked by complex technologies and high costs.

### SUMMARY OF THE INVENTION

The embodiments of the present invention provide a method and an apparatus for accessing an NFS so that the NFS is compatible with multiple operating systems conveniently.

An NFS access method provided in an embodiment of the present invention includes:
receiving a first request message, which is sent by a user equipment (UE) to an NFS according to a first file type;
converting, according to a preset mapping relation, the first request message into a second request message capable of driving a second file type in the NFS, and sending the second request message to the NFS;
receiving a first response message, which is based on the second file type and is sent by the NFS to the UE in response to the second request message; and
converting, according to the preset mapping relation, the first response message into a second response message which is based on the first file type, and sending the second response message to the UE.

An access apparatus provided in an embodiment of the present invention includes:
a UE interface, configured to: receive a first request message, which is sent by a UE to an NFS according to an available first file type, and send the first request message to a converting unit; and send a second response message received from the converting unit to the UE;
the converting unit, configured to: convert, according to a preset mapping relation, the first request message received from the UE interface into a second request message capable of driving a second file type in the NFS, and send the second request message to an NFS interface; and convert a first response message received from the NFS interface into the second response message which is based on the first file type, and send the second response message to the UE interface; and
the NFS interface, configured to: send the second request message to the NFS interface; receive the first response message, which is based on the second file type and is sent by the NFS to the UE in response to the second request message, and send the first response message to the converting unit.

Compared with the prior art, the embodiments of the present invention bring at least the following benefits:
Through the embodiments of the present invention, the file type used by the NFS is converted into the file type, which is identifiable by the operating system of the UE, the file system protocol is converted, different file types are virtualized into a universal file type, and the NFS is compatible with multiple operating systems.

### BRIEF DESCRIPTION OF THE DRAWINGS

To describe the technical solution under the present invention more clearly, the following outlines the accompanying drawings involved in the embodiments of the present invention. Apparently, the accompanying drawings outlined below are not exhaustive, and persons of ordinary skill in the art can derive other drawings from such accompanying drawings without creative efforts.
FIG. 1A is a schematic diagram showing a network structure of a point-to-point NFS in the prior art;
FIG. 1B is a schematic diagram showing a network structure of an NFS based on distributed access in the prior art;
FIG. 2 is a schematic diagram showing a file system structure in an operating system of a user host in the prior art;
FIG. 3 is a flowchart of a method for accessing an NFS according to an embodiment of the present invention;
FIG. 4 shows an operation time sequence when a virtual engine of a file system protocol transmits messages between a UE and an NFS according to an embodiment of the present invention;
FIG. 5 is a schematic diagram showing a structure of an access apparatus according to an embodiment of the present invention;
FIG. 6 is a schematic diagram showing a structure of a converting unit of an access apparatus according to an embodiment of the present invention; and
FIG. 7A to FIG. 7C are schematic diagrams showing the location of an access apparatus in a network in an embodiment of the present invention.

### DETAILED DESCRIPTION OF THE EMBODIMENTS

The technical solution according to embodiments of the present invention is hereinafter described with reference to the accompanying drawings. Evidently, the embodiments are illustrative and not exhaustive. All other embodiments, which can be derived by those skilled in the art from the embodiments given herein without creative efforts, fall within the scope of the present invention.

In a method for accessing an NFS according to an embodiment of the present invention, through virtualization of the file system protocol, the file type used by the NFS is virtualized into a universal file type identifiable by the operating system of the UE (NFS or CIFS supported by most operating systems). FIG. 3 is a flowchart of a method for accessing an NFS according to an embodiment of the present invention. As shown in FIG. 3, the method includes the following steps:
s301. Receive a first request message, which is sent by a UE to an NFS according to a first file type.
s302. Convert, according to a preset mapping relation, the first request message into a second request message capable of driving a second file type in the NFS, and send the second request message to the NFS.
s303. Receive a first response message, which is based on the second file type and is sent by the NFS to the UE in response to the second request message.
s304. Convert, according to the preset mapping relation, the first response message into a second response message which is based on the first file type, and send the second response message to the UE.

Through this embodiment, the file type used by the NFS is converted into the file type identifiable by the operating system of the UE, the file type protocol is converted, different file types are virtualized into a universal file type, and the NFS is compatible with multiple operating systems conveniently.

Specifically, the NFS access method provided in an embodiment of the present invention is implemented through a virtual engine of the file system protocol. In order for the NFS to be compatible with multiple operating systems, multiple server plug-ins and client plug-ins are configured. Each server plug-in corresponds to a file type, and each client plug-in corresponds to a protocol capable of driving a specific file type. When the virtual engine of the file system protocol is started, the virtual engine searches for the local available virtual server plug-ins and loads them one by one to support NFS, CIFS or other network file system protocols simultaneously; and automatically searches for the local available client plug-ins and loads them one by one to support multiple protocols for driving different file types simultaneously.

When receiving the first request message sent by the UE, the virtual engine selects the first server plug-in corresponding to the first file type available to the UE among the server plug-ins loaded beforehand; and receives the first request message through the first server plug-in.

According to the second file type in the NFS, the virtual engine selects the first client plug-in capable of driving the second file type in the NFS among the client plug-ins loaded beforehand; according to the preset mapping relation, the virtual engine converts the first request message into a second request message supported by the first client plug-in, and sends the second request message to the first client plug-in. The first client plug-in sends the second request message to the NFS. The mapping relation as a basis for converting the first request message into the second request message may be set beforehand. A specific conversion method is set for the conversion between different protocol messages, and the mapping relation is obtained as a basis for converting between different request messages.

Through the first client plug-in, the first response message based on the second file type is sent to the UE in response to the second request message.

The first response message received from the first client plug-in is converted, according to the preset mapping relation, into a second response message supported by the first server plug-in, and the first server plug-in sends the second response message to the UE. The mapping relation as a basis for converting the first response message into the second response message may be set beforehand. A specific conversion method is set for the conversion between different protocol messages, and the mapping relation is obtained as a basis for converting between different response messages.

The virtual engine of the file system protocol is exemplified below:
(1) The virtual engine of the file system protocol obtains configuration information, and loads the client plug-ins and the server plug-ins consecutively.
(2) The virtual engine of the file system protocol initializes the shared resources such as the buffer pool and working thread pool.
(3) The virtual engine of the file system protocol starts the virtual server corresponding to every server plug-in consecutively according to the configuration information.
(4) When a client such as an NFS/CIFS sends a mount request through the network, the corresponding server plug-in in the virtual engine of the file system protocol receives the request, and allocates a file system instance and initializes it. The virtual engine of the file system protocol converts the mount request according to the virtual client capable of driving the NFS, and sends the request to the virtual client. The virtual client executes the mount request in the NFS. After successful execution, the file system instance is registered.
(5) The virtual engine of the file system protocol receives a request such as read/write/stat/seek from the client such as the NFS/CIFS, converts the request, and invokes the corresponding virtual client to perform corresponding operations in the NFS.
(6) If the virtual engine of the file system protocol receives an umount operation from the client, the virtual engine submits all non-submitted requests first, and deregisters the file system instance after disconnecting the session.

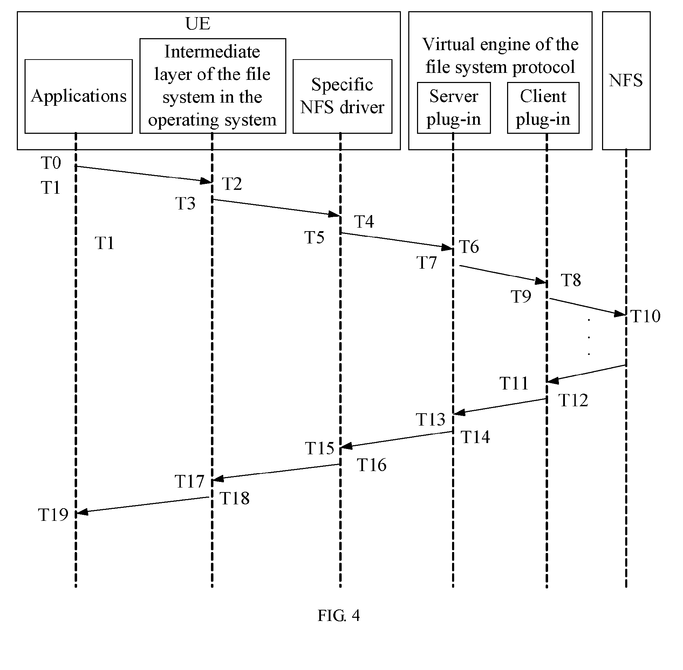

FIG. 4 shows an operation time sequence when a virtual engine of a file system protocol transmits messages between a UE and an NFS according to an embodiment of the present invention. As shown in FIG. 4, the message sent by the UE to the NFS arrives at the virtual server in the virtual engine of the file system protocol first. The virtual server converts the message sent by the UE into a message executable by the NFS, and sends the message to the virtual client. The virtual client sends the converted message to the NFS. After receiving the response from the NFS, the virtual client sends the response to the virtual client in the virtual engine of the file system protocol. The virtual client converts the response into a response identifiable by the UE, and sends the converted response to the virtual server. The virtual server sends the converted response to the UE. Through the foregoing procedure, the virtual engine of the file system protocol converts the file type used by the NFS into the file type identifiable by the operating system of the UE. Thereby, the UE can operate the NFS.

It is assumed that in an NFS server cluster, the IP address of the metadata server is 10.0.0.2, and that the file name is fs1. After the virtual engine of the protocol is applied, by accessing the NFS the UE can access the metadata server on an operating system not supporting NFS. The mount request is executed as follows:
mount -t nfs -o \\mount an NFS file system
user=xxx, pass=xxx, ldap=xx.xx.xx.xx, mds=10.0.0.2, fs=fs1 \\input the user name, password, authentication server address, server IP address, and file system name
localhost: /xxfs /mnt/fs1 \\the directory for mounting is /mnt/fs1

That is, the UE can access the metadata server by accessing the NFS.

Through this embodiment, the file type used by the NFS is converted into the file type identifiable by the operating system of the UE, the file system protocol is converted, different file types are virtualized into a universal file type, and the NFS is compatible with multiple operating systems.

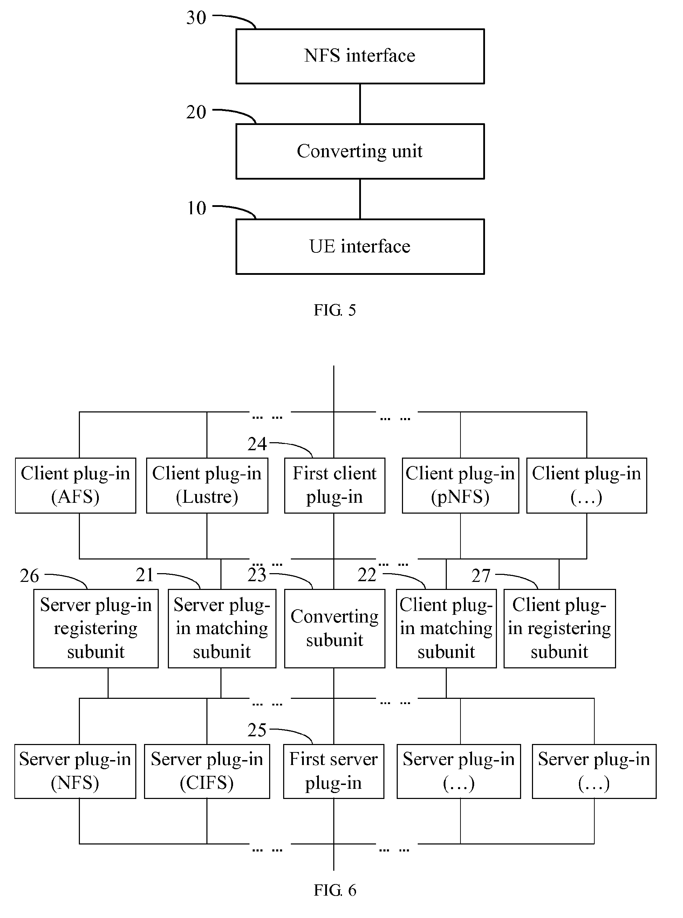

FIG. 5 is a schematic diagram showing a structure of an access apparatus according to an embodiment of the present invention. As shown in FIG. 5, the access apparatus provided in this embodiment includes:
a UE interface 10, configured to: receive a first request message, which is sent by a UE to an NFS according to an available first file type, and send the first request message to a converting unit 20; and send a second response message received from the converting unit 20 to the UE;
the converting unit 20, configured to: convert, according to a preset mapping relation, the first request message received from the UE interface 10 into a second request message capable of driving a second file type in the NFS, and send the second request message to an NFS interface 30; and convert a first response message received from the NFS interface 30 into the second response message which is based on the first file type, and send the second response message to the UE interface 10; and
the NFS interface 30, configured to: send the second request message to the NFS interface; receive the first response message, which is based on the second file type and is sent by the NFS to the UE in response to the second request message, and send the first response message to the converting unit 20.

FIG. 6 is a schematic diagram showing a structure of a converting unit of an access apparatus according to another embodiment of the present invention. As shown in FIG. 6, the converting unit 20 may include:
at least one server plug-in, with each server plug-in corresponding to a file type;
at least one client plug-in, with each client plug-in corresponding to a protocol capable of driving a specific file type;
a server plug-in matching subunit 21, configured to select, according to the first request message sent by the UE, a first server plug-in 25 corresponding to the first file type available to the UE among the at least one server plug-in;
a client plug-in matching subunit 22, configured to select, according to the second file type in the NFS, a first client plug-in 24 capable of driving the second file type in the NFS among the at least one client plug-in;
a converting subunit 23, configured to: convert, according to a preset mapping relation, the first request message sent by the first server plug-in 25 into a second request message supported by the first client plug-in 24, and send the second request message to the first client plug-in 24; convert a first response message received from the first client plug-in 24 into a second response message supported by the first server plug-in 25, and send the second response message to the first server plug-in 25;
the first client plug-in 24, configured to send the second request message sent by the converting subunit 23 to the NFS, and send the first response message sent by the NFS to the converting subunit;
the first server plug-in 25, configured to send the first request message sent by the UE to the converting subunit, and send the second response message sent by the converting subunit to the UE;
a server plug-in registering subunit 26, configured to register each server; search for local available virtual server plug-ins automatically upon startup of the apparatus, and load them consecutively to support NFS, CIFS or other network file system protocols simultaneously; and
a client plug-in registering subunit 27, configured to register each client; search for local available client plug-ins automatically upon startup of the apparatus, and load them consecutively to support protocols capable of driving different file types simultaneously.

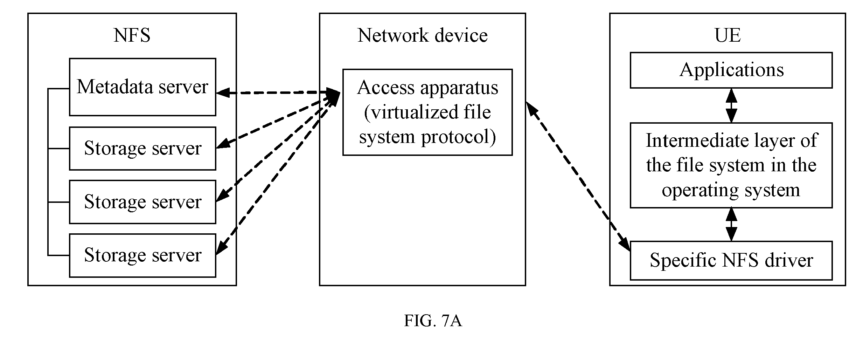

FIG. 7A to FIG. 7C are schematic diagrams showing the location of the access apparatus in the network. As shown in FIG. 7A, in the specific network deployment, the access apparatus may be located on a network device between the UE and the NFS, for example, located on a file system protocol conversion gateway or a router. In this way, the file system protocol is virtualized, and multiple file systems are supported.

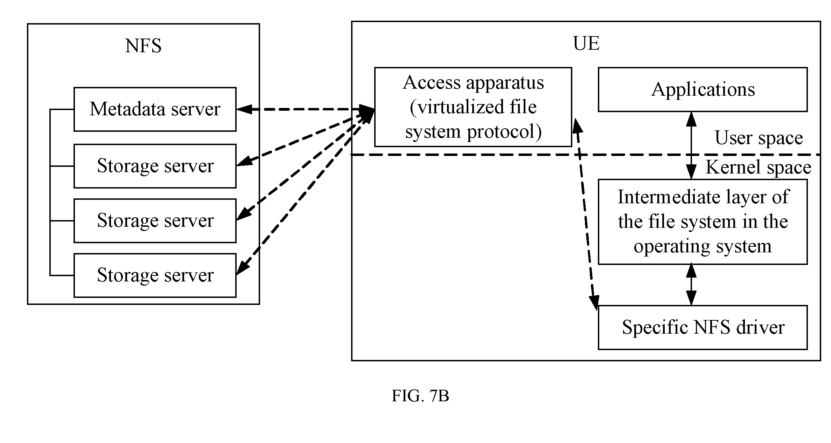

As shown in FIG. 7B, as a component that runs in a user space, the access apparatus may be located in the user space of the UE. The access apparatus can be installed in different operating systems so that one file type is compatible with multiple operating systems. Besides, because the component is developed in the user space of the user host, the component can be transplanted to a majority of operating systems easily, and runs as a service of the operating systems. The access apparatus is highly reliable, stable, and easy to develop.

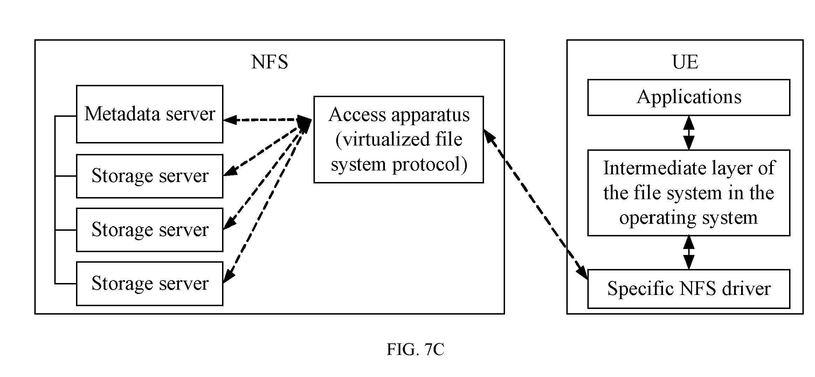

As shown in FIG. 7C, the access apparatus may also be located in the NFS so that the NFS can support multiple operating systems.

Through this embodiment, the file type used by the NFS is converted into the file type identifiable by the operating system of the UE, the file system protocol is converted, different file types are virtualized into a universal file type, and the NFS is compatible with multiple operating systems. Besides, when the access apparatus is integrated in the UE, the virtual engine can be implemented in the user space, which makes it very easy to get compatible with multiple operating systems; because no programming in the kernel space is required, the access apparatus is deployed without requiring compatibility and stability certification; because it is not necessary to develop codes of different operating systems in the kernel space, the costs of human resources and devices involved in the development are slashed. When the access apparatus is integrated in the NFS, the file system can support standard file systems such as the NFS and CIFS. When the access apparatus is integrated in the network device (such as a network switching device) between the UE and the NFS, the network switching device can provide new selling points and functions. Finally, because only one set of codes is required, the development cycle is shortened drastically; because the access apparatus supports the existing universal protocols such as NFS and CIFS, the user can use the access apparatus directly without learning new skill, and the training costs of the user are reduced.

The foregoing modules may be distributed on one apparatus or multiple apparatuses. The foregoing modules may be combined into one module, or split into multiple submodules.

Through the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as a compact disk-read only memory (CD-ROM), a universal serial bus (USB) flash disk, or a mobile hard disk), and may include several instructions that enable a computer device (such as a personal computer, a server, or a network device) to perform the methods provided in the embodiments of the present invention.

It is understandable to those skilled in the art that the accompanying drawings are only schematic diagrams of the preferred embodiments, and that the modules or processes in the accompanying drawings are not mandatory for implementing the present invention.

It is understandable to those skilled in the art that the modules in an apparatus provided in an embodiment of the present invention may be distributed into the apparatus described herein, or may be located in one or more apparatuses different from the apparatus described herein. The modules may be combined into one module, or split into multiple submodules.

The sequence number of an embodiment above is for ease of description only and does not represent the order of preference.

Detailed above are merely some exemplary embodiments of the present invention, and the scope of the present invention is not limited thereto. Any modifications or variations that can be derived by those skilled in the art shall fall within the protection scope of the present invention.

## Claims

1. A method for accessing a network file system (NFS), comprising:
receiving a first request message, which is sent by a user equipment (UE) to the NFS according to a first file type;
converting, according to a preset mapping relation, the first request message into a second request message capable of driving a second file type in the NFS, and sending the second request message to the NFS;
receiving a first response message, which is based on the second file type and sent by the NFS to the UE in response to the second request message; and
converting, according to the preset mapping relation, the first response message into a second response message which is based on the first file type, and sending the second response message to the UE.

2. The method according to claim 1, wherein before receiving the first request message, which is sent by the UE to the NFS according to the available first file type, the method further comprises:
configuring server plug-ins and client plug-ins, wherein each server plug-in corresponds a file type and each client plug-in corresponds to a protocol capable of driving a specific file type; and
registering the server plug-ins and client plug-ins.

3. The method according to claim 2, wherein the step of receiving the first request message, which is sent by the UE to the NFS according to the available first file type, comprises:
according to the first request message sent by the UE, selecting a first server plug-in corresponding to the first file type available to the UE among the at least one server plug-in; and receiving the first request message through the first server plug-in.

4. The method according to claim 3, wherein:
the step of converting, according to the preset mapping relation, the first request message into the second request message capable of driving the second file type in the NFS, and sending the second request message to the NFS comprises:
according to the second file type in the NFS, selecting a first client plug-in capable of driving the second file type in the NFS among the at least one client plug-in; according to the preset mapping relation, converting the first request message into the second request message supported by the first client plug-in, and sending it to the first client plug-in, wherein the first client plug-in sends the second request message to the NFS.

5. The method according to claim 4, wherein:
the step of receiving the first response message, which is based on the second file type and is sent by the NFS to the UE in response to the second request message comprises:
through the first client plug-in, sending the first response message, which is based on the second file type to the UE in response to the second request message.

6. The method according to claim 4 or 5, wherein:
the step of converting, according to the preset mapping relation, the first response message into the second response message which is based on the first file type, and sending the second response message to the UE comprises:
converting the first response message received from the first client plug-in into a second response message supported by the first server plug-in, wherein the first server plug-in sends the second response message to the UE.

7. An access apparatus, comprising:
a user equipment (UE) interface, configured to: receive a first request message, which is sent by a UE to a network file system (NFS) according to an available first file type, and send the first request message to a converting unit; and send a second response message received from the converting unit to the UE;
the converting unit, configured to: convert, according to a preset mapping relation, the first request message received from the UE interface into a second request message capable of driving a second file type in the NFS, and send the second request message to an NFS interface; and convert a first response message received from the NFS interface into the second response message which is based on the first file type, and send the second response message to the UE interface; and
the NFS interface, configured to: send the second request message to the NFS interface; receive the first response message, which is based on the second file type and is sent by the NFS to the UE in response to the second request message, and send the first response message to the converting unit.

8. The access apparatus according to claim 7, wherein the converting unit comprises:
at least one server plug-in, wherein each server plug-in corresponds to a file type;
at least one client plug-in, wherein each client plug-in corresponds to a protocol capable of driving a specific file type;
a server plug-in matching subunit, configured to select, according to the first request message sent by the UE, a first server plug-in corresponding to the first file type available to the UE among the at least one server plug-in;
a client plug-in matching subunit, configured to select, according to the second file type in the NFS, a first client plug-in capable of driving the second file type in the NFS among the at least one client plug-in;
a converting subunit, configured to: convert, according to the preset mapping relation, the first request message into the second request message supported by the first client plug-in, and send the second request message to the first client plug-in; and convert the first response message received from the first client plug-in into the second response message supported by the first server plug-in;
the first client plug-in, configured to send the second request message sent by the converting subunit to the NFS, and send the first response message sent by the NFS to the converting subunit; and
the first server plug-in, configured to send the first request message sent by the UE to the converting subunit, and send the second response message sent by the converting subunit to the UE.

9. The access apparatus according to claim 7, wherein the converting unit further comprises:
a server plug-in registering subunit, configured to register each server; and
a client plug-in registering subunit, configured to register each client.

10. The access apparatus according to any one of claims 7-9, wherein:
the access apparatus is located in a network device between the UE and the NFS, or located in a user space of the UE, or located in the NFS.
